# EUROPEAN PATENT APPLICATION

(11) **EP 1 253 561 A2**
(43) Date of publication of application: **30.10.2002**
(21) Application number: 02009041.1
(22) Date of filing: 23.04.2002
(51) Int. Cl.: G07F 7/08, G07G 1/00, G06F 17/60

(54) **Apparatus and system for monitoring a point card**

(30) Priority: 23.04.2001 JP 2001124276
(71) Applicant: Pioneer Corporation, Meguro-ku, Tokyo (JP)
(72) Inventor: Nohara, Manabu, Tsurugashima-shi, Saitama 350-2288 (JP); Ichihara, Naohiko, Tsurugashima-shi, Saitama 350-2288 (JP)
(74) Representative: Betten & Resch

(57) **Abstract**

The system stores information about a point card. When a user of the system goes out of his/her residence, the system finds a store at which the point card can be used. The system also determines whether the store is located within a predetermined distance from a current location of the user. The system informs the user of whether the point card has expired or not.

## Description

### BACKGROUND OF THE INVENTION

### 1. Field of the Invention

The present invention relates to an apparatus for monitoring/managing an expiration date of a point accumulation card and a system including such apparatus.

### 2. Description of the Related Art

A CD store, for example, has a point accumulation system that gives one or more points to a customer who buys a CD or other merchandise in the store. The points are given in the form of stamps or seals on the point card. When the accumulated point count reaches a predetermined value (i.e., a target point count), the store provides the customer with a certain present or bonus such as a gift, discount, coupon or cash-back. The point card system is popular and many other types of stores and shops use the point card system.

The point card system is advantageous to the customer, but the customer may not visit a particular type of shops very often. As a result, the customer may forget about the point card. The point card becomes invalid when an expiration date of the point card is reached.

### SUMMARY OF THE INVENTION

An object of the present invention is to provide a point card monitoring apparatus that can appropriately monitor the point card and a system including such monitoring apparatus.

According to one aspect of the present invention, there is provided an apparatus which manages a point card issued from a card issuing store, the apparatus being mobile, comprising: a memory which stores point card information about the point card issued from the card issuing store; a position detector which detects a current location of the apparatus; a store locator which determines whether there is a card usable store at which the point card can be used, within a predetermined distance from the current location of the apparatus detected by the position detector; and an outputting unit which outputs the card usable store in accordance with a determination result of the store locator.

According to a second aspect of the present invention, there is provided a method of monitoring a point card issued from a card issuing store, comprising the steps of: storing point card information about the issued point card; detecting a current location of the mobile terminal device; determining whether there is a card usable store at which the point card can be used, within a predetermined distance from the current location of the mobile terminal device detected in the detecting step; and outputting the card usable store in accordance with a determination result of the determining step.

According to a third aspect of the present invention, there is provided a system which manages a point card issued from a card issuing store, comprising: a mobile terminal device; a memory which stores point card information about the point card issued from the card issuing store; a position detector which detects a current location of the mobile terminal device; a store locator which determines whether there is a card usable store at which the point card can be used, within a predetermined distance from the current location of the mobile terminal device detected by the position detector; and a outputting unit which causes the mobile terminal device to output the card usable store in accordance with a determination result of the store locator.

### BRIEF DESCRIPTION OF THE DRAWINGS

Figure 1 illustrates a block diagram of a system for monitoring/managing a point card according to the present invention;
Figure 2 illustrates a communication sequence between a cash register and terminal device shown in Figure 1;
Figure 3 illustrates a flowchart of an expiration date monitoring operation performed by the system shown in Figure 1;
Figure 4A illustrates a message in a display screen prepared during the expiration date monitoring operation of Figure 3;
Figure 4B illustrates a message in another display screen prepared during the expiration date monitoring operation of Figure 3;
Figure 4C illustrates a map in still another display screen prepared during the expiration date monitoring operation of Figure 3;
Figure 5 illustrates a flowchart of an expiration date monitoring operation according to a second embodiment of the present invention;
Figure 6A illustrates a message in a display screen prepared during the expiration date monitoring operation of Figure 5;
Figure 6B illustrates a message in another display screen prepared during the expiration date monitoring operation of Figure 5;
Figure 6C illustrates a map in still another display screen prepared during the expiration date monitoring operation of Figure 5;
Figure 7 illustrates a flowchart of an expiration date monitoring operation according to a third embodiment of the present invention;
Figure 8A illustrates a message in a display screen prepared during the expiration date monitoring operation of Figure 7;
Figure 8B illustrates a message in another display screen prepared during the expiration date monitoring operation of Figure 7;
Figure 8C illustrates a map in still another display screen prepared during the expiration date monitoring operation of Figure 7;
Figure 9 illustrates a block diagram of a system for monitoring a point card according to a fourth embodiment of the present invention;
Figure 10 illustrates a flowchart of an expiration date monitoring operation performed by the system shown in Figure 9; and
Figure 11A illustrates a message in a display screen prepared during the expiration date monitoring operation of Figure 10;
Figure 11B illustrates a message in another display screen prepared during the expiration date monitoring operation of Figure 10;
Figure 11C illustrates a message in still another display screen prepared during the expiration date monitoring operation of Figure 10; and
Figure 11D illustrates a map in yet another display screen prepared during the expiration date monitoring operation of Figure 10.

### DETAILED DESCRIPTION OF THE INVENTION

Embodiments of the present invention will be described in reference to the accompanying drawings.

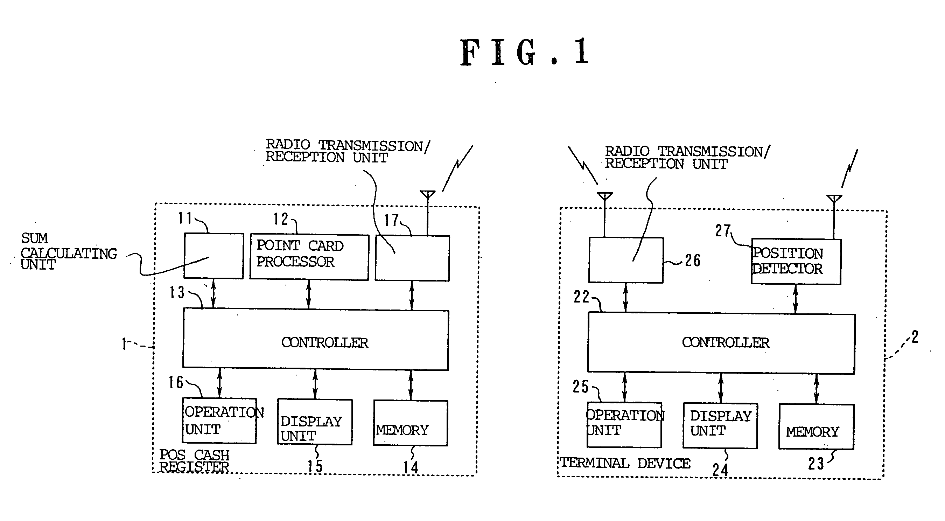

Referring to Figure 1, a schematic structure of a system for monitoring a point card is illustrated. The system includes a POS (point of sales) cash register 1 located in a store and a terminal device 2 which a user (customer or purchaser) can carry. Radio communication is made between the POS cash register 1 and terminal device 2.

The POS cash register 1 includes a total payment calculating unit 11, a point card processor 12, a controller 13, a memory 14, a display unit 15, an operation unit 16 and a radio transmission/reception device 17. The total payment calculating unit 11 is a main module of the POS cash register or checkout counter, which is used to count a sum of money paid for purchased merchandise. The point card processor 12 electronically issues a point card (electronic card) to a new customer. The point card processor 12 has other tasks such as monitoring of the expiration date of each of the issued point cards. The controller 13 is connected to the sum calculating unit 11, point card processor 12, memory 14, display unit 15, operation unit 16 and radio transmission/reception unit 17 and controls these hardware elements. The controller 13 thus controls the overall operation of the POS cash register 1. The memory 14 stores various data such as customer's names (card holder's names), telephone numbers, email addresses, card numbers, accumulated point counts, expiration dates, names of purchased merchandise, and dates of purchase (sales). The display unit 15 displays data prepared by the sum calculating unit 11 and/or point card processor 12. The display unit 15 also displays data and instructions entered from the operation unit 16. The radio transmission/reception unit 17 is a radio communication device which operates using Bluetooth technology.

The terminal device 2 is an apparatus for monitoring a point card. The terminal device 2 includes a controller 22, a memory 23, a display unit 24, an operation unit 25, a radio transmission/reception unit 26, and a position detector 27. The controller 22 is connected to the memory 23, display unit 24, operation unit 25, radio transmission/reception unit 26 and position detector 27, and controls these hardware elements. The controller 22 thus controls the overall operation of the terminal device 2. The memory 23 stores various information such as names of stores which have issued point cards to the user of the terminal device 2, locations of the stores (e.g., latitude and longitude of each store), card names , card numbers , accumulated point counts, target point counts and expiration dates. The information is stored in table form in the memory 23, and the table is referred to as a point card data table. The radio, transmission/reception unit 26 is a radio communication device which operates using the Bluetooth technology. The position detector 27 has a GPS to detect a current position of the terminal device 2. It should be noted that the position detector 27 may rely upon a technology other than the GPS.

The radio communication between the POS cash register 1 and terminal device 2 will be performed in the following manner.

If the user of the terminal device 2 approaches a store, in which the POS cash register 1 is located, a communication channel is established between the radio transmission/reception unit 17 and radio transmission/reception unit 26. Specifically, since the Bluetooth technology is utilized for communication between the cash register 1 and terminal device 2, the radio transmission/reception unit 26 is activated in response to an inquiry from the radio transmission/reception unit 17 so that a piconet is formed between the two radio transmission/reception units 17 and 26. The cash register 1 is a master and the terminal device 2 is a slave in the piconet, and the following communication is performed.

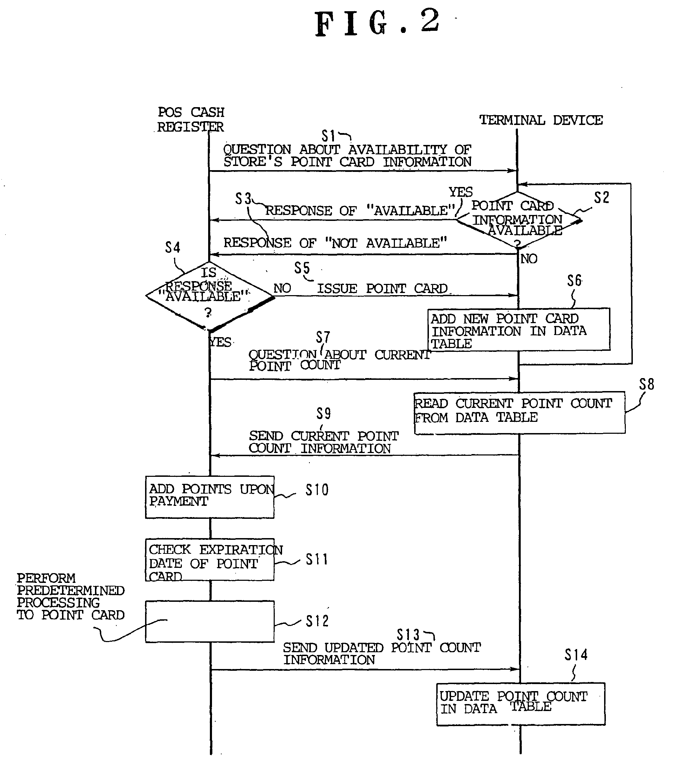

Referring to Figure 2, the controller 13 of the cash register 1 sends a question to the terminal device 2 to ask whether the terminal device 2 possesses a point card of the store (Step S1). The question from the cash register 1 includes codes representing a type of the point card and the store identification.

Upon receiving the question from the cash register 1, the controller 22 of the terminal device 2 determines whether there is a point card of the store specified by the question (Step S2). As mentioned above, the memory unit 23 has the point card data table in which is stored information such as various store's names, accumulated point counts and expiration dates of the respective point cards which the user of the terminal device holds. Therefore, the controller 22 of the terminal device 2 refers to the point card data table in the memory 23 on the basis of the information included in the question from the cash register 1, and determines whether the data about the point card of the store is stored. A determination result is sent to the cash register 1 (Step S3).

Upon receiving the determination result, the controller 13 of the cash register 1 determines whether the data about the point card of the store is available in the terminal device 2 (Step S4). If the controller 13 determines that no data about the store's point card is available, the controller 13 instructs issuance of the point card to the terminal device 2 (Step S5). In response to the card issuance instructions, the controller 22 of the terminal device 2 prepares and stores data about a new point card in the point card data table of the memory 23 (Step S6).

On the other hand, if there is data about the store' s point card in the point card data table of the memory 23, the controller 13 sends a request to the terminal device 2 to confirm a current point count (Step S7).

Upon receiving the request, the controller 22 of the terminal device 2 refers to the point card data table of the memory 23 to read the point count of the store's point card (Step S8). The controller 22 then sends data of the point count to the cash register 1 (Step S9).

When the customer pays money for one or more merchandise at the cash register 1 and the sum calculating unit 11 calculates the total expense, the controller 13 of the cash register 1 adds a certain point count, which corresponds to the total money paid for the merchandise, to the current point count of the point card (Step S10). At the same time, the point card processor 21 checks the expiration date of the point card, and performs necessary or predetermined processing to the point card (Steps S11 and S12). The controller 13 then sends the data of new point count, which is calculated at Step S10, to the terminal device 2 (Step S13).

The controller 22 of the terminal device 2 receives the data of new point count, and updates the point count of this store stored in the point card data table of the memory 23 (Step S14).

The controller 22 of the terminal device 2 also performs expiration date monitoring on the basis of the point card information stored in the memory 23. The expiration dates of the respective point cards are monitored every day or every time the terminal device 2 is turned on.

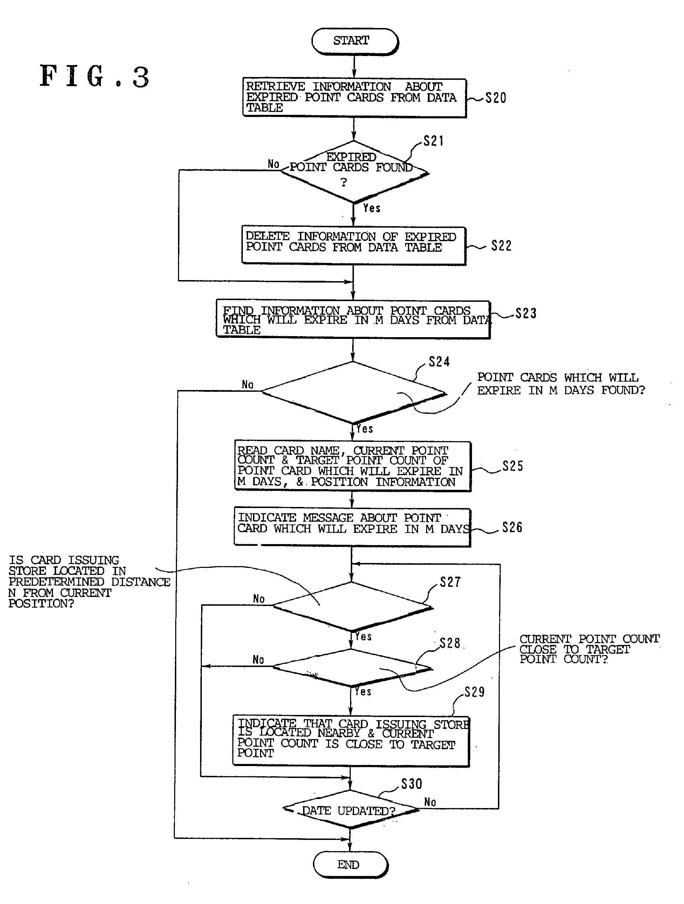

Referring to the flowchart shown in Figure 3, the expiration date monitoring operation will be described. The controller 22 retrieves information of point cards of which expiration dates have lapsed, from the point card data table of the memory 23 (Step S20) to find out if there is any expired or invalid point card (Step S21). If the invalid point card is found, the controller 22 deletes the information of such invalid point card from the point card data table of the memory 23 (Step S22). It should be noted that the display unit 24 may display a certain message or the like before, during and/or after the information of the invalid point card is deleted. If there is no invalid point card, the program proceeds to Step S23.

The controller 22 refers to the point card data table of the memory 23 again and retrieves information of point cards of which expiration dates will lapse within predetermined days (e.g., M days) from today (Step S23) to find out if there is any soon to expire point card (Step S24). If there is a point card which will expire in M days, the controller 22 reads information of the point card name, accumulated point count, target point count and location of the store that has issued the point card from the memory 23, and stores the information into another memory labeled "expiring soon" (not shown) in the form of a list or table (Step S25). The display unit 24 displays a message or the like to indicate that there is a point card which will expire within M days, as shown in Figure 4A (Step S26). This message informs the user of the terminal device 2 of a fact that the user has a point card which will become invalid soon. It should be noted that the display unit 24 may display the list or table of "expiring soon" point card(s) at Step S26. It should also be noted that the terminal device 2 may also make a sound and/or vibrate to notify the terminal device user of a fact that the message is displayed.

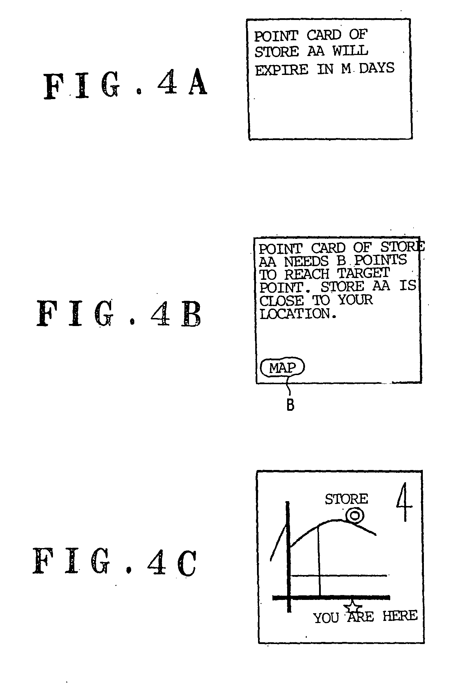

Subsequently, it is determined whether the store which has issued the "expiring soon" point card is located within a predetermined distance N from the current position of the terminal device 2 (Step S27). The information of the current position of the terminal device 2 is supplied to the controller 22 from the position detector 27. The controller 22 calculates the distance from the current position of the terminal device 2 to the card issuing store on the basis of the current position of the terminal device 2 and the location of the card issuing store. The controller 22 then determines whether the calculated distance is not greater than the predetermined value N. When it is determined that the store exists within the predetermined distance N, the controller 22 then determines whether the current point count of the point card is close to the target point count (Step S28). For instance, if the current point count is less than the target point count by "P" (e.g., one point), the controller 22 determines that the current point count is close to the target point count. If the answer at Step S28 is yes, the controller 22 causes the display unit 24 to show that the store which has issued the "expiring soon" point card is located in the neighborhood of the current position of the terminal device 2 and the current point count is close to the target point count ( Step S29). The display unit 24, for example, displays a message as shown in Figure 4B. The user of the terminal device 2 is therefore informed of a fact that the store which has issued the "expiring soon" point card is adjacent to the user. The screens of the display unit 24 shown in Figures 4A and 4B indicate the store's name, how many days are remaining until the expiration date, and how many points the current point count is short of the target point count. The displayed information is prepared (calculated) from the point card information stored in the point card data table of the memory 23. The screen of Figure 4A may be automatically switched over to the screen of Figure 4B. Alternatively, the screen of Figure 4A may be changed to the screen of Figure 4B upon a screen change command entered by the user who operates the operation unit 25. The screen of Figure 4B may also include a "map" button B. When the user clicks (presses or touches) the button B, the screen of Figure 4B may be replaced by the screen of Figure 4C. The screen of Figure 4C shows a map in which the location of the store and the current position of the terminal device 2 are indicated.

After Step S29, the controller 22 determines whether the date is updated (i.e., whether the clock passes 12:00 p.m.) (Step S30). If not updated, the program returns to Step S27 to repeat the procedure of Steps S27 to S30. If the date is updated, the program goes to "END", and restarts the above described procedure from Step S20.

In the above described point card managing system, the point card itself is an electronic card. The point card exists electronically but not physically. Point card information (or electronic point card) is transmitted to the terminal device 2 from the cash register 1 in the form of a radio wave (radio signal). The user of the terminal device 2 therefore does not have to carry the point card in the user's purse or bag. The user may have a plurality of point cards which can be efficiently managed if the user has the terminal device 2.

Since the expiration date monitoring/managing operation shown in Figure 3 informs the user of a fact that the current point count is close to the target point count and the point card will expire in M days, the user can efficiently stop by the store. In particular, the terminal device 2 is a portable device so that the user is notified of such fact at any time and place (e.g., when the user is out of his/her residence). Thus, the user can go to the store on his or her way to somewhere else.

The data about the point card which will expire soon is displayed in the display unit 24 and the data about the store which has issued such point card is displayed in the display unit 24 in the above described embodiment. In short, the expiration date of the card is the only trigger for displaying the data/information in the above described embodiment. It should be noted, however, that the controller 22 of the terminal device 2 may rely upon the distance between a card issuing store and the terminal device 2 to trigger the data displaying operation. A card issuing store located close to the terminal device 2 may be found out on the basis of the point card information of the point card of the user. The display unit 24 may display data about the point card and the card issuing store when the store exists near the current position of the terminal device 2.

It should also be noted that the terminal device 2 may inform the terminal device user of a fact that the target point has been reached and the point card will expire within predetermined days, by image, sound and/or vibration.

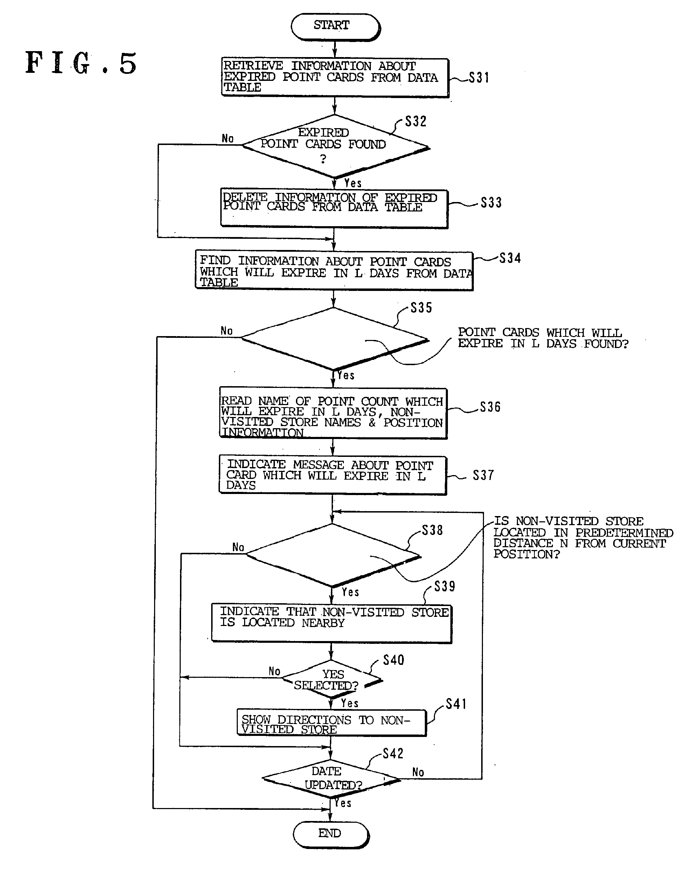

Referring to Figure 5, a second embodiment of the present invention will be described. Similar reference numerals are used in the first and second embodiments. The terminal device 2 shown in Figure 1 is used again in the second embodiment, but operates under a different control program. The expiration date monitoring/managing operation according to the flowchart of Figure 5 deals with a so-called "rally" point card. The "rally" point card gives a user a benefit or bonus (e.g., a present, discount and coupon) when the user purchases merchandise at a predetermined number of different stores of a plurality of affiliated stores. The memory 23 of the second embodiment stores various data such as a name of a store which has issued a point card, names of affiliated stores, locations of the card issuing store and affiliated stores (e.g., latitude and longitude of each store), card name, card number, names of stores at which the user already purchased something, a target number of stores at which the user has to purchase merchandise to obtain the benefit, and expiration date of the card. The data is stored in the point card data table of the memory 23.

In the expiration date monitoring/managing operation shown in Figure 5, the controller 22 of the terminal device 2 retrieves information of point cards of which expiration dates have lapsed, from the point card data table of the memory 23 (Step S31) to find out if there is any invalid point card (Step S32). If the expired point card is found, the controller 22 deletes the information of such expired or invalid point card from the point card data table of the memory 23 (Step S33). It should be noted that Steps S31 to S33 are the same as Steps S20 to S22 in Figure 3. The display unit 24 of the terminal device 2 may display a certain message before, during and/or after the information of the expired point card is deleted. If there is no expired point card, the program proceeds to Step S34.

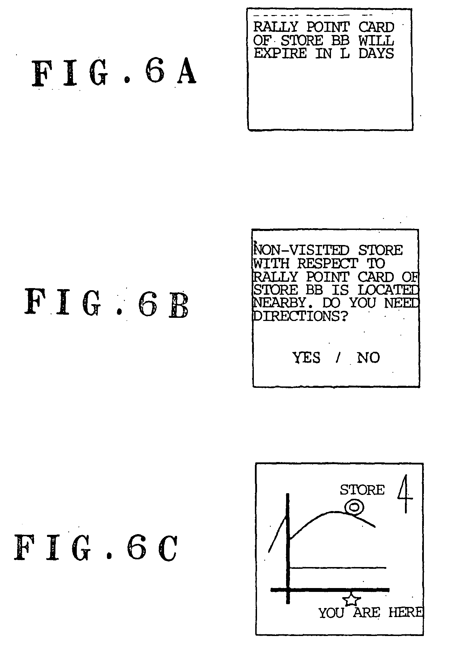

The controller 22 refers to the point card data table of the memory 23 again and retrieves information of point cards which will expire within predetermined days (e.g., L days) from today (Step S34) to find out if there is any soon to expire point card (Step S35). If there is a point card which will expire in L days, the controller 22 reads information of the point card name, names of stores at which the user has not yet purchased anything (i.e., non-visited store's names), and locations of the non-visited stores from the memory 23, and stores the information into another memory labeled "expiring soon" (not shown) in the form of a list or table (Step S36). The display unit 24 displays a message or the like to indicate that there is a point card which will expire within L days, as shown in Figure 6A (Step S37). This message informs the user of the terminal device 2 of a fact that the user has a point card which will become invalid soon. It should be noted that the display unit 24 may display the list of "expiring soon" point card(s) itself at Step S37. If there are more than one point card which will expire in L days, the information about each of these point cards is prepared in the "expiring soon" list.

Subsequently, it is determined whether any of the non-visited stores with respect to the point card which will expire in L days is located within a predetermined distance N from the current position of the terminal device 2 (Step S38). The information of the current position of the terminal device 2 is supplied to the controller 22 from the position detector 27. The controller 22 calculates the distance from the current position of the terminal device 2 to the non-visited store on the basis of the current position of the terminal device 2 and the location of the non-visited store. The controller 22 then determines whether the calculated distance is not greater than the predetermined value N. When it is determined that the non-visited store exists within the predetermined distance N, the controller 22 then causes the display unit 24 to show that the store at which the user can use the "soon-expiring" point card, but where the user has not purchased anything, is located in the neighborhood of the current position of the terminal device 2 (Step S39). The display unit 24, for example , displays a message as shown in Figure 6B. The user of the terminal device 2 is therefore informed of presence of the non-visited store. At Step S39, the screen of the display unit 24 also indicates a question sentence, which asks the user whether a map of the nearby non-visited store should be displayed, as shown in Figure 6B. The controller determines whether the user selects "YES" or "NO" (Step S40). The user operates the operation unit 25 to make the selection. The screen of Figure 6B is replaced by a screen of Figure 6C when "YES" is selected. The screen of Figure 6C shows a map in which the location of the non-visited store and the current position of the terminal device 2 are indicated (Step S41). It should be noted that the terminal device 2 may also make a sound and/or vibrate to notify the terminal device user of a fact that the message is displayed, when Step S39 is performed.

After Step S41, the controller 22 determines whether the date is updated (i.e., whether the clock passes 12:00 p.m.) (Step S42). If not updated, the program returns to Step S38 to repeat the procedure of Steps S38 to S42. If updated, the program goes to "END", and restarts the procedure from Step S31.

In the point card managing operation of Figure 5, the user who has the terminal device 2 is informed of that a non-visited store is located nearby if the expiration date of the rally point card is reached within L days and the user walks in the neighborhood of the non-visited store. The user of the terminal device 2 can therefore collect points from different stores efficiently. In particular, the terminal device 2 is a portable device so that the user is notified of such fact at any time and place (e.g., when the user is out of his/her residence). Thus, the user can stop by the non-visited store(s) on his or her way to somewhere else.

The data about the point card which will expire soon is displayed in the display unit 24 and the data about the non-visited store(s) is displayed in the display unit 24 in the above described embodiment (Figure 5). In short, the expiration date of the point card is the only trigger for displaying the data/information in the above described embodiment. It should be noted, however, that the controller 22 of the terminal device 2 may rely upon the distance between the terminal device 2 and a non-visited affiliated store to trigger the data displaying operation. A non-visited affiliated store located close to the terminal device 2 may be found out on the basis of the point card information of the rally point card of the user. The display unit 24 may display data about the point card and the non-visited affiliated store when the non-visited affiliated store exists near the current position of the terminal device 2.

It should also be noted that the terminal device 2 may inform the terminal device user of a fact that the predetermined number of different stores among the affiliated stores have been visited and the point card will expire within predetermined days by image, sound and/or vibration.

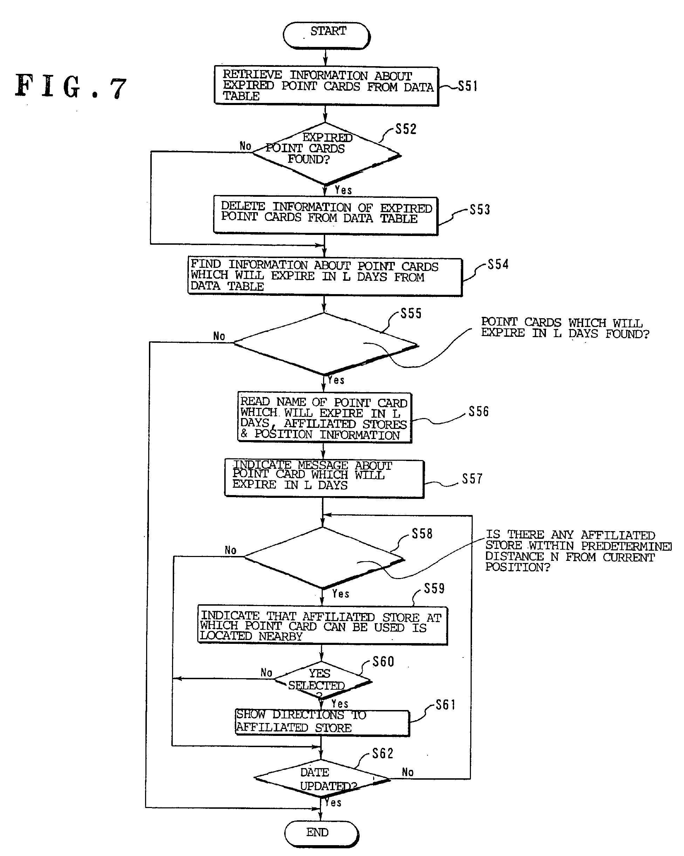

Referring to Figure 7, a third embodiment of the present invention will be described. Similar reference numerals are used in the first to third embodiments. The terminal device 2 shown in Figure 1 is used again in the third embodiment, but operates under a different control program. The expiration date monitoring/managing operation according to the flowchart of Figure 7 deals with a point card which gives a user a benefit or bonus (e.g., a present, discount and coupon) when the user visits and buys something at any of a plurality of affiliated stores predetermined times. The memory 23 of the third embodiment stores various data such as a name of a store which has issued a point card to the user, names of affiliated stores including the card issuing store, locations of all the affiliated stores (e.g., latitude and longitude), card name, card number, a target (or obligated) number of visits to obtain the benefit for the issued card, and expiration date of the issued card. The data is stored in the point card data table of the memory 23.

In the expiration date monitoring/managing operation shown in Figure 7, the controller 22 of the terminal device 2 retrieves information of point cards of which expiration dates are already reached, from the point card data table of the memory 23 (Step S51) to find out if there is any invalid point card (Step S52). If an expired point card is found, the controller-22 deletes the information of such expired or invalid point card from the point card data table of the memory 23 (Step S53). It should be noted that Steps S51 to S53 are the same as Steps S20 to S22 in Figure 3. The display unit 24 of the terminal device 2 may display a certain message before, during and/or after the information of the expired point card is deleted. If there is no expired point card, the program proceeds to Step S54.

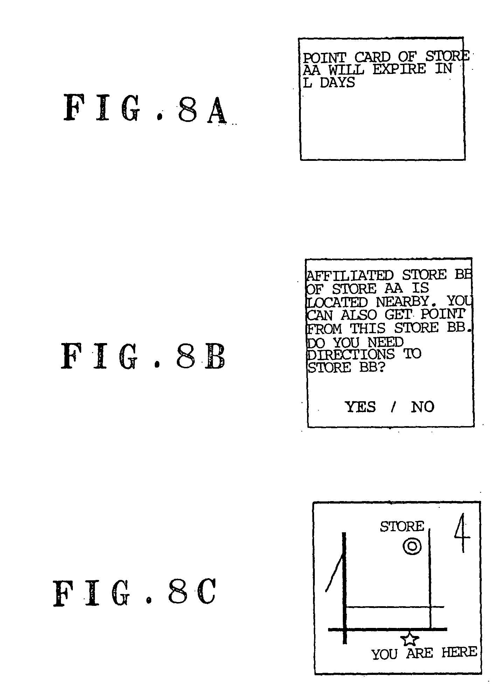

The controller 22 refers to the point card data table of the memory 23 again and retrieves information of point cards which will expire within predetermined days (e.g., L days) from today (Step S54) to find out if there is any such soon to expire point card (Step S55). If there is a point card which will expire in L days, the controller 22 reads information of the point card name, name of the store which has issued that card, and location of the store from the memory 23, and stores the information into another memory labeled "expiring soon" (not shown) in the form of a list or table (Step S56). The display unit 24 displays a message or the like to indicate that there is a point card which will expire within L days, as shown in Figure 8A (Step S57). It should be noted that the display unit 24 may display the list of "expiring soon" point card(s) itself at Step S37. If there are more than one point card which will expire in L days, the information about each of these point cards is prepared in the "expiring soon" list.

Subsequently, it is determined whether any of the affiliated stores including the store that has issued a point card which will expire in L days is located within a predetermined distance N from the current position of the terminal device 2 (Step S58). The information of the current position of the terminal device 2 is supplied to the controller 22 from the position detector 27. The controller 22 calculates the distance from the current position of the terminal device 2 to each of the affiliated stores on the basis of the current position of the terminal device 2 and the locations of the affiliated stores. The controller 22 then determines whether the calculated distance is not greater than the predetermined value N. When it is determined that one of the affiliate stores (i.e., card usable store) exists within the predetermined distance N, the controller 22 then causes the display unit 24 to show that the store at which the user can use the "soon-expiring" point card is located in the neighborhood of the current position of the terminal device 2 (Step S59). The display unit 24, for example, displays a message as shown in Figure 8B. At Step S59, the screen of the display unit 24 also indicates a question sentence, which asks the user whether a map of the card usable store should be displayed, as shown in Figure 8B. The controller 22 determines whether the user selects "YES" or "NO" (Step S60). The user operates the operation unit 25 to make the selection. The screen of Figure 8B is replaced by a screen of Figure 8C when "YES" is selected. The screen of Figure 8C shows a map in which the location of the card usable store and the current position of the terminal device 2 are indicated (Step S61). It should be noted that the terminal device 2 may also make a sound and/or vibrate to notify the terminal device user of a fact that the message is displayed, when Step S59 is performed.

After Step S61, the controller 22 determines whether the date is updated (i.e., whether the clock passes 12:00 p.m.) (Step S62). If not updated, the program returns to Step S58 to repeat the procedure of Steps S58 to S62. If updated, the program goes to "END" , and restarts the procedure from Step S51.

In the point card managing operation shown in Figure 7, the user who has the terminal device 2 is informed of that a certain affiliated store is located nearby if the expiration date of the point card is reached within L days and the user walks in the neighborhood of the affiliated store. The user of the terminal device 2 can therefore collect points from the affiliated stores efficiently. In particular, the user may not remember the names and locations of all the affiliated stores. The terminal device 2 remembers the names and locations of all the affiliated stores, and notifies the user of the presence of a store at which the user can use the soon-expiring card. The terminal device 2 is a portable device so that the user is notified of such fact at any time and place (e.g., when the user is out of his/her residence). Thus, the user can stop by the affiliated store(s) on his or her way to somewhere else.

The data about the point card which will expire soon and the data about the affiliated store at which such point card can be used are displayed in the display unit 24 in the embodiment of Figure 7. In short, the expiration date of the point card is the only trigger for displaying the data/information in the above described embodiment. It should be noted, however, that the controller 22 of the terminal device 2 may rely upon the distance between the terminal device 2 and an affiliated store to trigger the data displaying operation. An affiliated store close to the terminal device 2 may be found out on the basis of the point card information o the point card of the user. The display unit 24 may display the point card information and the affiliated store when the affiliated store is located near the current position of the terminal device 2.

It should also be noted that the terminal device 2 may inform the terminal device user of a fact that the user has visited and bought something at the affiliated stores the predetermined times and the point card will expire within predetermined days by image, sound and/or vibration.

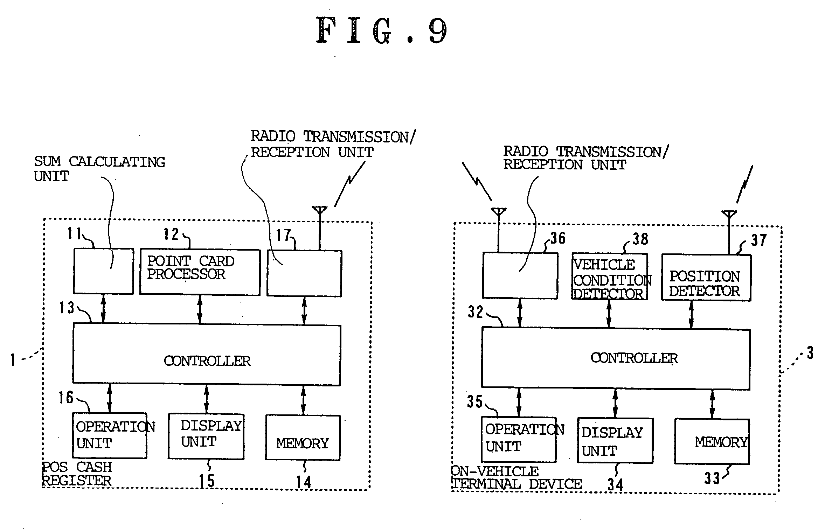

Referring to Figure 9, a fourth embodiment of the present invention will be described. Similar reference numerals are used in the first to fourth embodiments. The point card monitoring/managing system of this embodiment includes the POS cash register 1 located in a shop and a terminal device 3 located on a vehicle. The POS cash register 1 shown in Figure 9 is similar to the POS cash register shown in Figure 1.

The terminal device 3 includes a controller 32, a memory 33, a display unit 34, an operation unit 35, a radio transmission/reception unit 36, a position detector 37 and a vehicle condition detector 38. The controller 32 is connected to the memory 33, display unit 34, operation unit 35, radio transmission/reception unit 36, position detector 37 and vehicle condition detector 38, and controls these hardware elements. The controller 32 thus controls the overall operation of the terminal device 3. The memory 33 stores various information such as names of shops which have issued point cards to the user of the terminal device 3, names of affiliated shops, locations of the shops (e.g., latitude and longitude), card names , card numbers, accumulated point counts , target point counts and expiration dates. The information is stored in the form of a table in the memory 33, and this table is referred to as a point card data table. In this embodiment, the memory 33 also stores information about the vehicle such as mileage at the most recent engine oil change date, mileage at the most recent oil filter change date, current mileage, the most recent MOT (Japan's Ministry of Transport) test date, recommended date of wheel rotation (e.g., relocating of front wheels to rear wheels and vice versa), and recommended check/change date of particular parts of the vehicle. The information about the vehicle is referred to as vehicle maintenance information. The radio transmission/reception unit 36 is a radio communication device which operates with the Bluetooth technology. The position detector 37 has a GPS to detect a current position of the terminal device 3 or the vehicle. It should be noted that the position detector 37 may be a car navigation system (not shown), or the position information may be given from the car navigation system on the vehicle. The vehicle condition detector 38 detects engine and vehicle running parameters such as the mileage, vehicle speed, engine revolution speed and intake air pressure. The vehicle condition detector 38 is connected to an electronic control system (not shown) which controls and handles the engine running condition and the vehicle running condition, including an amount of fuel to be injected into the engine and ignition timing. The vehicle condition detector 38 is also connected to a LAN in the vehicle. The electronic control system supplies the vehicle maintenance information to the vehicle condition detector 38.

The controller 32 of the terminal device 3 monitors an expiration date of a point card, which is issued to an owner of the vehicle (customer) from a car dealer, car repair shop, gasoline station, car accessory shop or the like. The point card is issued, for example, when the engine oil is changed at the car repair shop. It should be noted that the point card in this embodiment is a coupon with which the customer is entitled to free or discounted engine oil change.

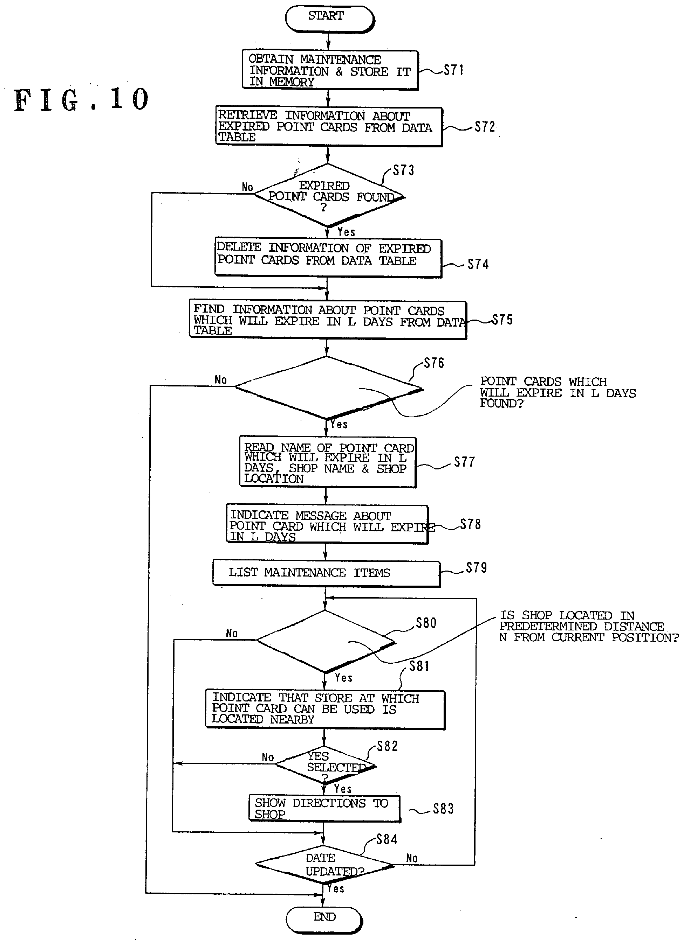

The controller 32 of the on-vehicle terminal device 3 is operated to monitor the expiration date of the point card as shown in Figure 10.

The controller 32 first obtains the maintenance information from the vehicle condition detector 38 and stores the maintenance information in the memory 33 (Step S71).

The controller 32 retrieves information of point cards of which expiration dates have lapsed, from the point card data table of the memory 33 (Step S72) to find out if there is any expired or invalid point card (Step S73). If an expired point card is found, the controller 32 deletes the information of the expired point card from the point card data table of the memory 33 (Step S74). It should be noted that the display unit 34 may display a certain message or the like before, during and/or after the information of the expired point card is deleted. If there is no expired point card, the program proceeds to Step S75.

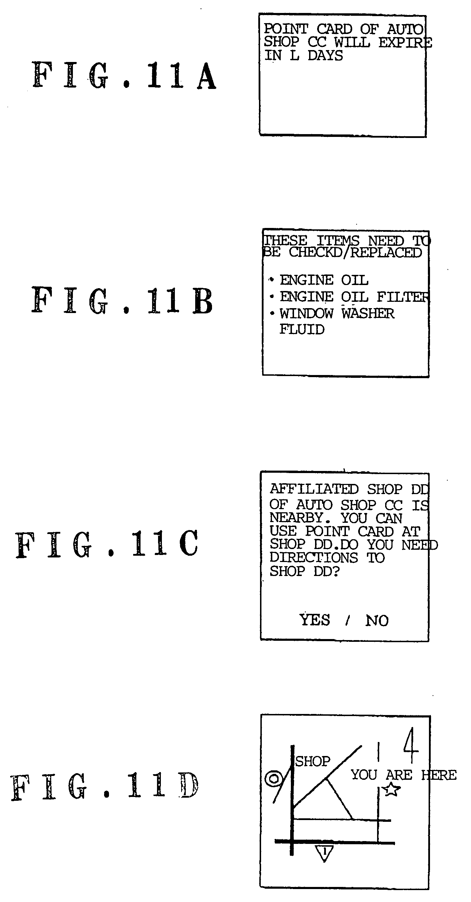

The controller 32 refers to the point card data table of the memory 33 again and retrieves information of point cards which will expire in L days from today (Step S75) to find out if there is any soon-expiring point card (Step S76). If there is a point card which will expire in L days, the controller 32 reads information of the point card name and the location of the shop which has issued the point card from the memory 33, and stores the information into another memory labeled "expiring soon" (not shown) in the form of a list or table (Step S77). The display unit 34 displays a message or the like to indicate that there is a point card which will expire within L days, as shown in Figure 11A (Step 578). This message informs the user of the terminal device 3 of a fact that the user has a point card which will become invalid soon. It should be noted that the display unit 34 may display the list of "expiring soon" point card itself at Step S78. It should also be noted that the terminal device 2 may also make a sound and/or vibrate to notify the terminal device user of a fact that the message is displayed, when Step S78 is performed.

The controller 32 also causes the display unit 34 to indicate names of items to be checked and/or replaced (Step 579). The controller 32 calculates the difference between the current mileage and the mileage at the most recent engine oil change date. If the difference is greater than a predetermined value, the controller 32 causes the display unit 34 to display "Engine Oil" as an item to be changed. In another case, the display unit 34 may display "Engine Oil", "Oil Filter" and "Window Washer Fluid" as items to be checked and changed, as shown in Figure 11B.

Subsequently, it is determined whether the shop which has issued the "expiring soon" point card or any of the affiliated shops is located within a predetermined distance N from the current position of the terminal device 3 (Step S80). The information of the current position of the terminal device 3 is supplied to the controller 32 from the position detector 37. The controller 32 calculates the distance from the current position of the terminal device 3 to the nearest shop on the basis of the current position of the terminal device 3 and the locations of the shops. The controller 32 then determines whether the calculated distance is not greater than the predetermined value N. When it is determined that the nearest shop exists within the predetermined distance N, the controller 32 causes the display unit 34 to show that the shop at which the user can use the "expiring soon" point card is located in the neighborhood of the current position of the terminal device 3 (Step S81). The display unit 34, for example, displays a message as shown in Figure 11C. At Step S81, the display unit 34 also indicates a question which asks the user whether a map of the nearest shop should be displayed, together with YES and NO buttons. The use operates the operation unit 35 to select YES or No, and the controller 32 determines whether the use has selected YES or NO (Step S82). If YES is selected, directions to the nearest shop from the location of the terminal device 3 are present in the display unit 34 as shown in Figure 11D (Step S83). Thus, thee screen of Figure 11C changes to the screen of Figure 11D. It should be noted that the terminal device 2 may also make a sound and/or vibrate to notify the terminal device user of a fact that the map is displayed, when Step S83 is performed.

After Step S83, the controller 32 determines whether the date is updated (i.e., whether the clock passes 12:00 p.m.) (Step S84). If not updated, the program returns to Step S80 to repeat the procedure of Steps S80 to S84. If updated, the program goes to "END", and restarts the procedure from Step S71.

Since the point card monitoring operation shown in Figure 10 informs the user that one of the affiliated shops (including the point card issuing shop) is located nearby, some parts (including the engine oil, brake fluid, engine coolant, etc.) need to be checked and replaced, and the point card will expire in L days, the user can stop by the shop efficiently. In particular, the terminal device 3 is loaded on the vehicle so that the user is notified of such fact at any time and place (e.g., when the user is out of his/her residence). Thus, the user can go to the shop on his or her way to somewhere else. In addition, the user is timely reminded of MOT test.

In the embodiment of Figure 10, the data about the point card which will expire soon is displayed in the display unit 34 together with the names of items to be checked and replaced, and the data about the shops at which such point card can be used is displayed in the display unit 34. In short, the expiration date of the point card is the only trigger for displaying the data/information in the above described embodiment. It should be noted, however, that the controller 32 of the terminal device 3 may rely upon the distance between the terminal device 3 and a card usable shop to trigger the data displaying operation. A card usable shop located in the neighborhood of the terminal device 3 is found out on the basis of the point card information of the point card of the user. The display unit 34 may display data about the card usable shop and point card when the card usable shop exists near the current location of the terminal device 3. The location of such affiliated shop may be displayed together with the names of items to be checked and replaced.

Although the point card is an electronic card in the above described embodiments, the point card may be data itself. In short, the point card can take any suitable physical appearance or form as long as the store or shop issues a point card with an expiration date.

Further, the radio transmission/reception device is not limited to the Bluetooth technology. For instance, the radio transmission/reception device may be a cellular telephone.

Moreover, although the memory 23 (or 33), position detector 27 (or 37) and controller 22 (or 32) are incorporated (integrated) in the terminal device 2 (or 3) in the above described embodiments, the present invention is not limited in this regards. For example, at least one of the memory, position detector and controller may be located in a separate machine such as a server, and the terminal device may obtain information about a car usable store or shop located near the terminal device from the separate machine by wireless communication.

## Claims

1. An apparatus which manages a point card issued from a card issuing store, the apparatus being mobile, comprising:
a memory which stores point card information about the point card issued from the card issuing store;
a position detector which detects a current location of the apparatus;
a store locator which determines whether there is a card usable store at which the point card can be used, within a predetermined distance from the current location of the apparatus detected by the position detector; and
an outputting unit which outputs the card usable store in accordance with a determination result of the store locator.

2. The apparatus according to claim 1 further including a first controller which determines whether the point card will expire in a predetermined period from a current date on the basis of an expiration date included in the point card information stored in the memory, wherein the store locator determines whether there is the card usable store when the first controller determines that the point card will expire in the predetermined period from the current date, and the outputting unit outputs the card usable store in accordance with the determination result of the store locator.

3. The apparatus according to claim 1 or 2, wherein the apparatus is a portable terminal device.

4. The apparatus according to claim 1 or 2, wherein the apparatus is a terminal device located in a vehicle.

5. The apparatus according to claim 2, wherein the outputting unit outputs that the point card will expire in the predetermined period when the first controller determines that the point card will expire in the predetermined period.

6. The apparatus according to one of the claims 1 to 5, wherein the outputting unit includes a display unit to display directions to the card usable store.

7. The apparatus according to one of the claims 1 to 6, wherein the point card is issued from a device located in the card issuing store and transmitted to the apparatus in the form of a radio signal, and the apparatus further includes a reception unit which receives the radio signal and a second controller which obtains the point card information, which includes an expiration date of the point card, from the radio signal and which causes the memory to store the point card information.

8. The apparatus according to one of the claims 1 to 7, wherein the point card information stored in the memory includes an expiration date of the point card and a location of the card issuing store, and the store locator considers that the card issuing store is the card usable store when the store locator determines that the location of the card issuing store included in the point card information stored in the memory is within the predetermined distance from the current position detected by the position detector.

9. The apparatus according to one of the claims 1 to 8, wherein the point card information stored in the memory includes a current point count and a target point count, the outputting unit includes a determination unit to determine whether a difference between the current point count and the target point count is less than a predetermined value, and the outputting unit outputs the card usable store when the determination unit determines that the difference between the current point count and the target point count is less than the predetermined value.

10. The apparatus according to one of the claims 1 to 9, wherein the point card information stored in the memory includes a location of the card issuing store and locations of affiliated stores at which the point card can also be used, and the store locator determines whether there is the card usable store within the predetermined distance from the current location of the apparatus on the basis of the locations of the card issuing store and affiliated stores.

11. The apparatus according to one of the claims 1 to 10, wherein the point card information stored in the memory includes an expiration date of the point card, locations of affiliated stores at which the point card can also be used, and the affiliated stores with which the point card has not been used, and the store locator considers that the group of the affiliated stores is the card usable store when the one of the group of the affiliated stores is located within the predetermined distance from the current location of the apparatus.

12. The apparatus according to claim 4 further including a vehicle condition detector which obtains maintenance information about the vehicle, wherein the outputting unit displays items to be at checked on the basis of the maintenance information when the first controller determines that the point card expires in the predetermined period.

13. The apparatus according to claim 7, wherein the second controller deletes information from the memory about the expired point card.

14. A method of monitoring a point card issued from a card issuing store, comprising the steps of:
A) storing point card information about the issued point card;
B) detecting a current location of the mobile terminal device;
C) determining whether there is a card usable store at which the point card can be used, within a predetermined distance from the current location of the mobile terminal device detected in Step B; and
D) outputting the card usable store in accordance with a determination result of Step C.

15. A system which manages a point card issued from a card issuing store, comprising:
a mobile terminal device;
a memory which stores point card information about the point card issued from the card issuing store;
a position detector which detects a current location of the mobile terminal device;
a store locator which determines whether there is a card usable store at which the point card can be used, within a predetermined distance from the current location of the mobile terminal device detected by the position detector; and
an outputting unit which causes the mobile terminal device to output the card usable store in accordance with a determination result of the store locator.

16. The system according to claim 15, wherein the card issuing store is part of the system,
the card issuing store issues the point card by transmitting a radio signal to the mobile terminal device,
the memory, position detector, store locator and outputting unit are integrated in the mobile terminal device,
the mobile terminal device receives the radio signal and causes the memory to store the point card information carried by the radio signal,
an expiration date of the point card is included in the point card information,
the system further includes a first controller which determines whether the point card will expire in a predetermined period from a current date on the basis of the expiration date included in the point card information stored in the memory,
the store locator determines whether there is a card usable store when the first controller determines that the point card will expire in the predetermined period from the current date, and
the outputting unit outputs the card usable store in accordance with a determination result of the store locator.

17. The system according to claim 16, wherein the card issuing store adds an additional point count to a current point count of the point card upon payment processing being made at the card issuing store, and transmits a total of the additional point count and current point count to the mobile terminal device by a second radio signal, and
the mobile terminal device includes a second controller which causes the memory to update the current point count of the point card information stored in the memory to the total of the additional point count and current point count when the mobile terminal device receives the second radio signal.
